# EUROPEAN PATENT SPECIFICATION

(11) **EP 1 930 185 B1**
(45) Date of publication and mention of the grant of the patent: **28.10.2009**
(21) Application number: 07122128.7
(22) Date of filing: 03.12.2007
(51) Int. Cl.: B60C 11/03

(54) **Pneumatic tire with spiral grooving**
Luftreifen mit spiralförmigen Rillen
Pneu doté d'un rainurage en spirale

(30) Priority: 04.12.2006 US 633695
(43) Date of publication of application: 11.06.2008
(73) Proprietor: The Goodyear Tire & Rubber Company, Akron, OH 44316-0001 (US)
(72) Inventor: Puhala, Aaron Scott, Kent, OH 44240 (US); Poling, David Charles, Uniontown, OH 44685 (US); Maxwell, Paul Bryan, Kent, OH 44240 (US); Nelson, Robert Bernard, Wadsworth, OH 44281 (US)
(74) Representative: Kutsch, Bernd

(56) References cited:
- EP-A- 0 066 531
- EP-A- 0 719 661
- DE-U1- 9 005 030
- FR-A- 2 643 856
- JP-A- 11 198 608
- NL-A- 7 010 460

## Description

### Field of Invention

The present invention is directed to a pneumatic tire. More specifically, the present invention is directed to a pneumatic tire and tread wherein the tread has at least one circumferentially extending spiral groove.

### Background of the Invention

In a conventional pneumatic tire, particularly a high-performance tire, the tread pattern is generally formed by combining circumferential grooves extending along the circumferential direction of the tire with a plurality of grooves inclined relative to the circumferential direction. The combination of grooves forms a plurality of tread blocks along the radially outer surface of tire. If the inclined grooves do not extend completely across the equatorial plane of the tire, a central rib may be formed in the tread.

The grooves, and the resulting tread elements formed, partially determine the performance characteristics of the tire. It is a goal of the present invention to achieve a tire with excellent wet tire performance and good traction characteristics.

EP-A- 0 719 661 describes a tire according to the preamble of claim 1.

### Summary of the Invention

The present invention is directed to a pneumatic tire according to claim 1 having improved wet drive characteristics wherein the tread is provided with grooves designed to assist in moving water away from the center of the tire tread. The spiral groove creates a spiral rib or projecting tread element row that moves across the tread width.

Dependent claims refer to preferred embodiments of the invention.

The tire has at least one spiral groove and may be part of an asymmetrical or directional tire tread. The tire preferably has not more than ten such spiral grooves and can have as few as only one groove, or alternatively 2, 3 or 4 such grooves. The spiral groove may be located in only one tread half or may cross the equatorial plane.

In one aspect of the invention, the spiral groove is inclined at an angle of not more than 30°, alternately between 10° to 20°, relative to the equatorial plane of the tire.

### Brief Description of the Drawings

The invention will be described by way of example and with reference to the accompanying drawings in which:
FIG. 1A illustrates a pneumatic tire;
FIG. 1B is a flat rendering of the tread of FIG. 1;
FIG. 2 illustrates a second tire embodiment employing the spiral groove;
FIG. 2B is a flat rendering of the tread of FIG. 2;
FIG. 3 illustrates a third tire embodiment employing the spiral groove;
FIG. 3B is a flat rendering of the tread of FIG. 3; and
FIG. 4 is a fourth embodiment of a tire tread.

### Detailed Description of the Invention

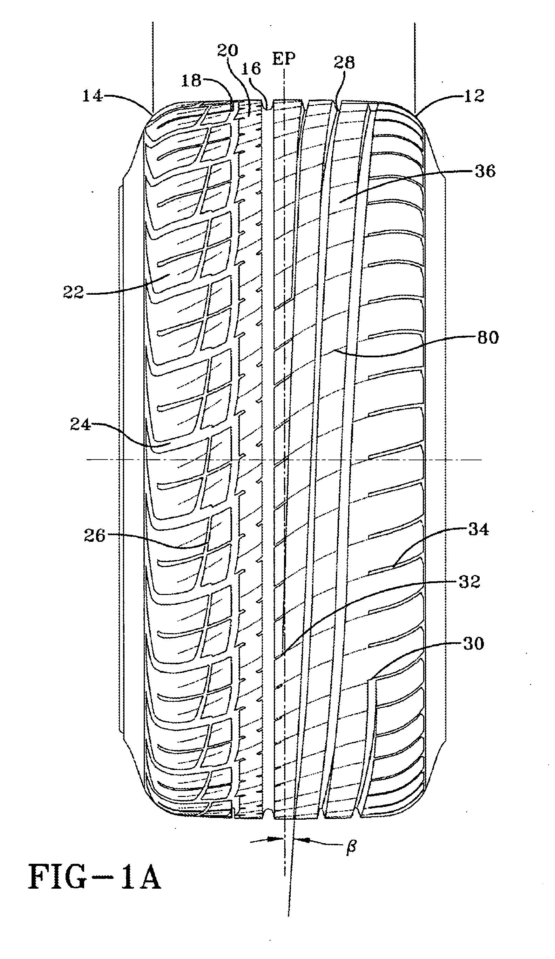

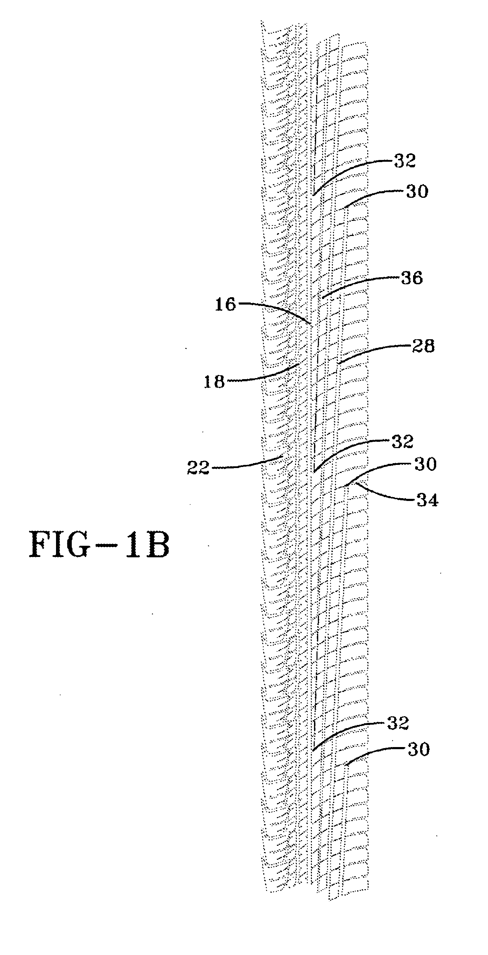

FIG. 1A illustrates a pneumatic tire and FIG. 1B is a flat view of the tire tread of FIG. 1A. The tire has a tread defined between a pair of opposing tread edges 12, 14. Located at a mid-point between the tread edges 12, 14, and along a mid-point of the tire, is the tire equatorial plane EP that divides the tread into a pair of adjacent tread halves.

In the first tread half are two continuous circumferentially extending grooves 16, 18. A continuous rib 20 is located between the pair of circumferentially extending grooves 16, 18. Axially outward of the continuous rib 20 is a shoulder region located between one of the circumferential grooves and the tread edge. The shoulder region has a plurality of tread blocks 22 created by lateral grooves 24 extending between the adjacent circumferential groove 18 and the tread edge 14. In the illustrated shoulder region, the shoulder tread blocks 22 are further divided by short length circumferential grooves 26.

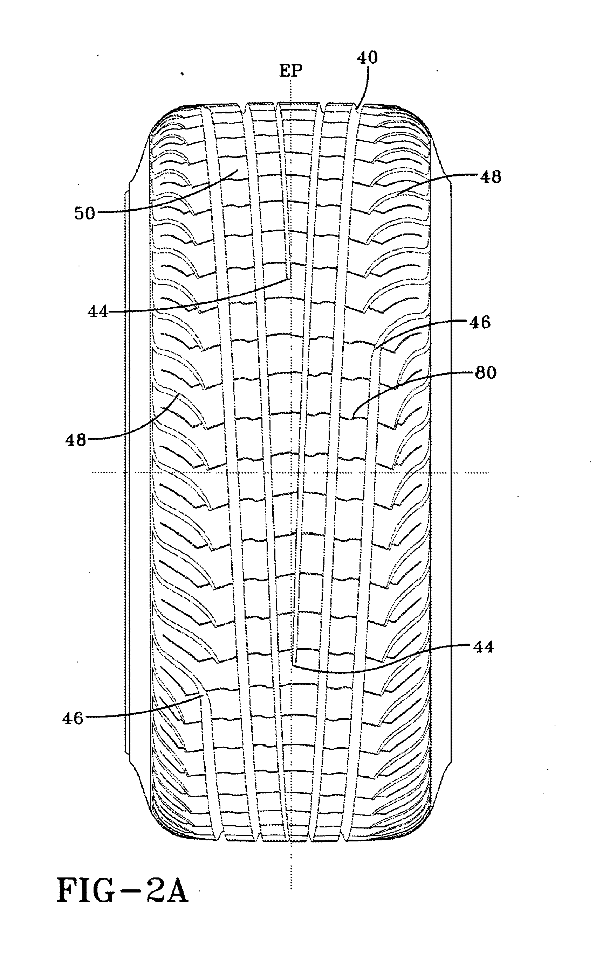

In the second tread half is at least one circumferentially extending groove 28 having a spiral configuration that winds along the tread surface. Relative to the equatorial plane of the tire, the spiral groove 28 is inclined at an angle β, relative to the equatorial plane, of not more than 30°, such as between 5° and 20°, for instance 10° or 15°. The spiral groove 28 has a pair of terminal ends 30, 32, see FIG. 1B. The terminal ends of the spiral groove 28 are laterally spaced from one another across the tread width. A terminal end 30, 32 of the groove is defined as such when it is a blind end (i.e. the groove terminates in tread rubber and is not connected to another groove) or connects to, or is coincident with, another groove wherein the other groove has a substantially different orientation from the first groove, i.e. the other groove has an inclination angle substantially greater than 30° (this type of terminal end is illustrated in FIGS 2A-3B).

A first terminal end 30 for the spiral groove 28 is located near the tread edge. The terminal end 30 may be located at the tread edge or even in the tire shoulder. The terminal end is connected to a lateral groove 34, and coincident with the end of the lateral groove 34; the lateral groove 34 being one in a plurality of lateral grooves 34 located in the shoulder region of the particular tread half. The connection to the lateral groove 34 enables any water in the spiral groove 28 to be ejected from the side of the tire through the lateral groove 34. Preferably, a terminal end 30 of a spiral groove, when located in a shoulder region of the tread, is located within 20% of the tread width from the tread edge 12, most preferably, within 15% of the tread width from the tread edge (such as from 5% to 10%) the tread width being calculated between the opposing tread edges 12, 14.

For the illustrated tire, a second terminal end 32 of the illustrated spiral groove 28 is located near the equatorial plane EP of the tire. When the terminal end of a spiral groove is located within the central region of the tire, i.e. the central 50% of the tread width, the terminal end is most preferably located at or spaced not more than 10%, most preferably not more than 5%, of the tread width from the equatorial plane EP of the tire; the 10% spacing being considered "near" the equatorial plane EP of the tire.

Additionally, the width of the spiral groove 28 may vary over the length of the groove 28. For the spiral groove 28 of FIGS. 1A and 1B, beginning at the terminal point 30 near the equatorial plane EP of the tire, the width of the groove gradually increases from a very narrow width, reaching a maximum width at the tread edge terminal point 28. The width of the groove 28 may vary from what is conventionally referred to as a sipe width, i.e. a width in the range from 0.2% to 0.8% of the tread width, to any greater width. Thus, for the tread of FIGS. 1A and 1B, the spiral grooves 28 increase from a sipe to a wide groove as they travel across the tread.

The spiral groove 28 has a circumferential length between the terminal ends 30, 32 of at least 50% of the circumferential length of the tire, both length measurements being made on the outer tread surface of the tire and parallel to the equatorial plane EP. Preferably, the spiral groove 28 has a length of at least 75% of the circumferential length of the tire. In the illustrated tire, the spiral groove 28 has a length approximately 95% of the circumferential length of the tire and wraps about the tire tread just under one full revolution. In another desired configuration, the spiral groove 28 has a length of at least 100% of the circumferential length of the tire, such as between 110% to 180%, the spiral groove 28 wrapping about the tread at least once. The wider the tire, and the greater the tread width for the spiral groove 28 to travel, the greater the wrapping of the groove 28 about the tire circumference.

The spiral groove 28 is distinct from the continuous circumferentially extending grooves 16, 18 as the continuous circumferentially extending grooves 16, 18 each form a ring around the outer circumference of the tire and do not have a stopping or starting point. The spiral grooves 28 are defined by laterally offset terminal points that create a spiral rib 36 that "moves" across the tread half. While the spiral grooves 28 of FIGS. 1A and 1B do not fully wrap about the tread circumference, the grooves 28 create a plurality of ribs 36 that fully wrap about the tread, and preferably the spiral ribs 36 generated have a length greater than the circumferential length of the tire, as measured parallel to the equatorial plane EP.

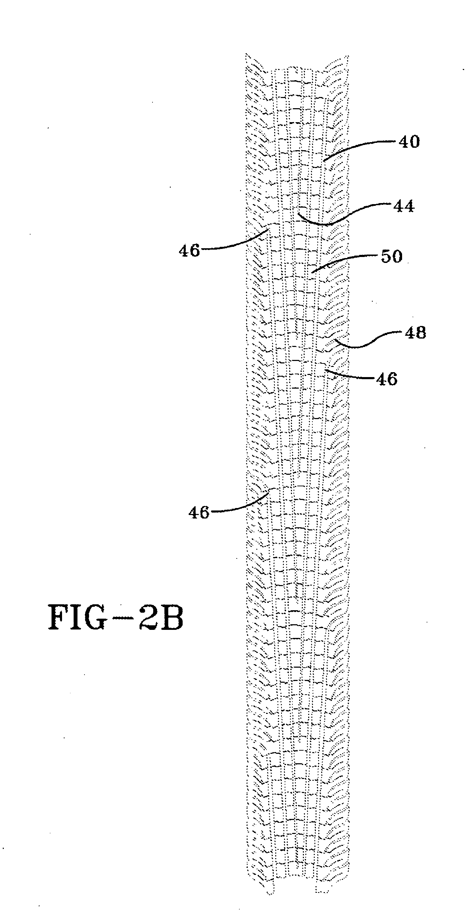

In the tread of FIGS. 2A and 2B, the tread is provided with six spiral grooves 40. Each spiral groove 40 has an inner terminal end 44 located near the equatorial plane EP of the tread with an outer terminal end 46 located near the tread edges with the outer terminal ends 46 merging into lateral grooves 48. The outer terminal points 46 of the spiral grooves 40 in each tread half are circumferentially offset from each other, creating in each tread half an offset mirror image of the other tread half. In these spiral grooves 40, the groove width gradually increases from the inner terminal point 44 to the outer terminal point 46. The spiral grooves 40 create a continuous spiral rib 50 extending from one tread edge to the tire equatorial plane, with the ribs merging together at the equatorial plane, effectively creating a continuous rib across the entire tread.

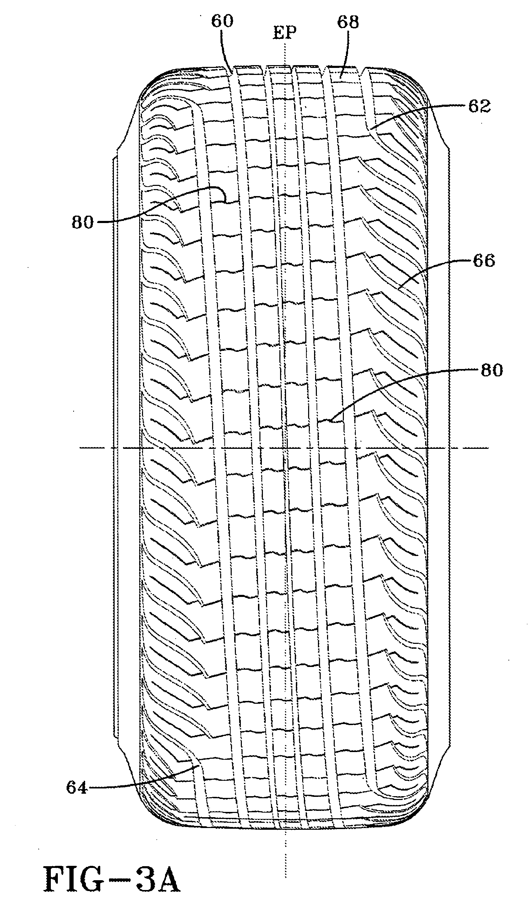

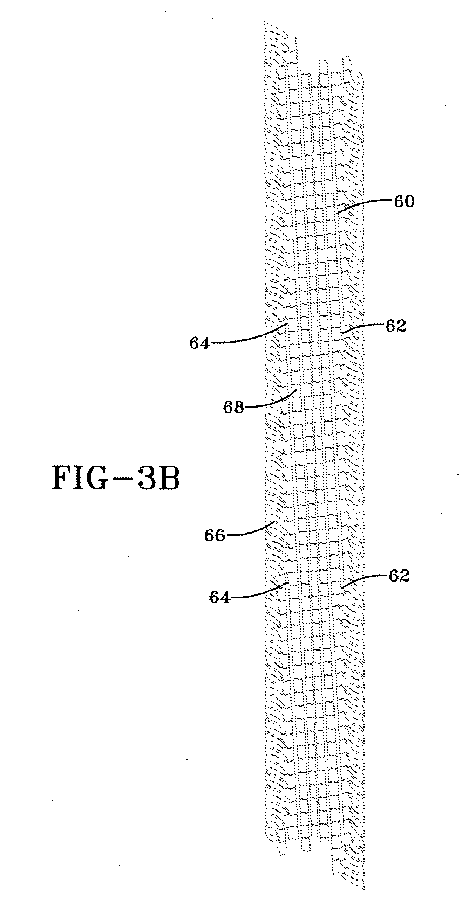

In the tread of FIGS. 3A and 3B, spiral grooves 60 extend from one terminal end 62 located in one tread half, near the tread shoulder, to a second terminal end 64 located in the other tread half, near the opposing tread shoulder, the spiral grooves 60 traversing the equatorial plane EP of the tire. The terminal ends 62, 64 are coincident with ends of lateral grooves 66 in the tread shoulders. Multiple continuous spiral ribs 68 that "travel" across the tread width are created by the grooves 60. In this embodiment, the width of the spiral grooves 60 varies, with the width decreasing in the central region of the tread, and having a minimum width at or near the equatorial plane and a maximum width at or near the groove ends 64, 66.

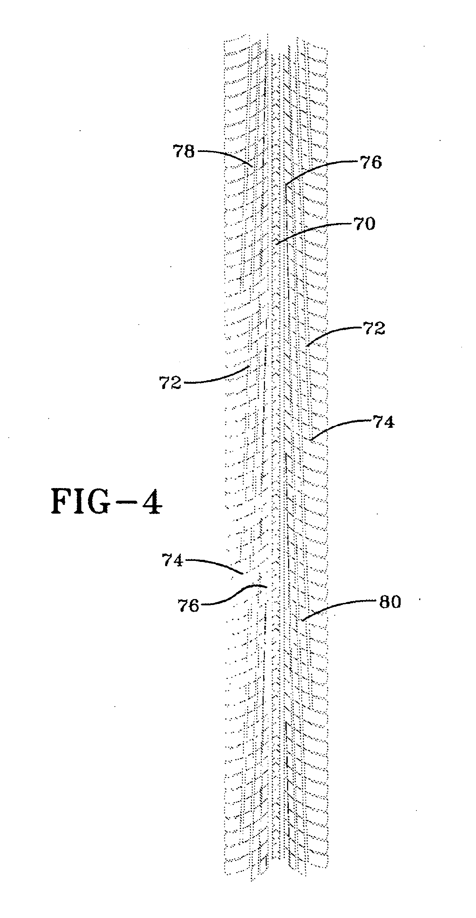

FIG. 4 illustrates another embodiment of a tread having spiral grooves. The tread has a central rib 70 located on the equatorial plane of the tread. In each tread half, on opposing sides of the central rib 70, are multiple spiral grooves 72. The spiral grooves 72 have a first terminal end 74 located near the tread shoulder and a second terminal end 76 located within the tread half, distanced from the equatorial plane. Similar to the other embodiments, the spiral grooves 72 create multiple continuous spiral ribs 78 that travel across the tread.

All of the illustrated spiral grooves are smooth sided spiral grooves; however, if desired the spiral groove may have a secondary zig-zag configuration as the spiral grooves wind across the tread surface. Also, while each illustrated tread has more than one spiral groove, the tread may be provided with only a single spiral groove extending from one tread edge to the other, the groove wrapping about the tire circumference multiple times. The number of spiral grooves in the tread will depend on the desired tire tread configuration; in the illustrated embodiments, the number of spiral grooves varies from a total of three to six grooves. Preferably, the number of spiral grooves is less than ten.

Each of the illustrated treads shows a plurality of sipes 80 in the tread. Any desired sipe configuration may be employed; the particular configuration selected being determined by the tire engineer to achieve the desired tire characteristics. In each illustrated embodiment, the sipes connect the adjacent wraps of the spiral grooves 28, 40, 60, 70.

Also, while not illustrated, if desired for additional water or noise evacuation in the tread, the tread may include any variation of lateral grooves extending between the adjacent wraps of the spiral grooves 28, 40, 60, 70. Such a tread can be easily visualized by replacing any of the sipes 80 in the illustrated embodiments with lateral grooves.

## Claims

1. A pneumatic tire, the tire having a tread, a radially outermost surface of the tread defining a circumferential length of the tire, the tread comprising at least one circumferentially extending groove (28), the groove having a pair of terminal ends (30, 32), wherein the at least one circumferentially extending groove (28) has a spiral configuration across at least a part of the tread surface wherein the length of the at least one spiral groove (28) between the terminal ends (30, 32) is greater than 50% of the circumferential length of the tire, **characterized in that** the tread has not more than ten spiral grooves therein.

2. The tire of claim 1 wherein the at least one spiral groove (28) is inclined at an angle of not more than 30° relative to the equatorial plane (EP) of the tire.

3. The tire of claim 1 or 2 wherein both terminal ends (30, 32) of the at least one spiral groove (28) are located in the same tread half.

4. The tire of at least one of the previous claims, the tire tread having a pair of opposing tread edges (12, 14), the tread having a defined width between the tread edges (12, 14), wherein one terminal end (30, 32) of the at least one spiral groove (28) is located within 20% of the tread width from a tread edge (12, 14).

5. The tire of at least one of the previous claims wherein one terminal end (30, 32) of the at least one spiral groove (28) is at or near the equatorial plane (EP) of the tire.

6. The tire of at least one of the previous claims, the tire tread further comprising a plurality of transverse grooves (34), wherein one terminal end (30, 32) of the at least one spiral groove (28) is coincident with a transverse groove (34).

7. The tire of at least one of the previous claims wherein the length of the at least one spiral groove (28) between the terminal ends (30, 32) is greater than 75% of the circumferential length of the tire.

8. The tire of claim 7 wherein the length of the at least one spiral groove (28) between terminal ends (30, 32) is greater than the circumferential length of the tire.

9. The tire of at least one of the previous claims wherein the at least one spiral groove (28) traverses the equatorial plane of the tire.

10. The tire of at least one of the previous claims wherein one terminal end (30, 32) of the at least one spiral groove (28) is a blind end in the tread.

11. The tire of at least one of the previous claims wherein the width of the at least one spiral groove (28) varies along the length of the groove.

12. The tire of claim 1 having only one spiral groove (28).

13. The tire of claim 2 wherein the spiral groove (28) is inclined at an angle of between 5° and 20°.

## Patentansprüche

1. Luftreifen, wobei der Reifen eine Lauffläche aufweist, wobei eine radial äußerste Fläche der Lauffläche eine Umfangslänge des Reifens definiert, wobei die Lauffläche mindestens eine sich in Umfangsrichtung erstreckende Rille (28) umfasst, wobei die Rille ein Paar Enden (30, 32) aufweist, wobei die mindestens eine sich in Umfangsrichtung erstreckende Rille (28) über mindestens einen Teil der Laufflächenoberfläche eine spiralförmige Konfiguration aufweist, wobei die Länge der mindestens einen spiralförmigen Rille (28) zwischen den Enden (30, 32) größer als 50% der Umfangslänge des Reifens ist, **dadurch gekennzeichnet, dass** die Lauffläche nicht mehr als zehn spiralförmige Rillen darin aufweist.

2. Reifen nach Anspruch 1, wobei die mindestens eine spiralförmige Rille (28) in einem Winkel von nicht mehr als 30° bezüglich der Äquatorebene (EP) des Reifens geneigt ist.

3. Reifen nach Anspruch 1 oder 2, wobei sich beide Enden (30, 32) der mindestens einen spiralförmigen Rille (28) in der gleichen Laufflächenhälfte befinden.

4. Reifen nach mindestens einem der vorgenannten Ansprüche, wobei die Reifenlauffläche ein Paar einander gegenüberliegender Laufflächenränder (12, 14) aufweist, wobei die Lauffläche eine definierte Breite zwischen den Laufflächenrändern (12, 14) aufweist, wobei sich ein Ende (30, 32) der mindestens einen spiralförmigen Rille (28) innerhalb von 20% der Laufflächenbreite von einem Laufflächenrand (12, 14) befindet.

5. Reifen nach mindestens einem der vorgenannten Ansprüche, wobei ein Ende (30, 32) der mindestens einen spiralförmigen Rille (28) sich an oder in Nähe der Äquatorebene (EP) des Reifens befindet.

6. Reifen nach mindestens einem der vorgenannten Ansprüche, wobei die Reifenlauffläche weiter eine Vielzahl von Querrillen (34) umfasst, wobei ein Ende (30, 32) der mindestens einen spiralförmigen Rille (28) mit einer Querrille (34) zusammenfällt.

7. Reifen nach mindestens einem der vorgenannten Ansprüche, wobei die Länge der mindestens einen spiralförmigen Rille (28) zwischen den Enden (30, 32) größer als 75% der Umfangslänge des Reifens ist.

8. Reifen nach Anspruch 7, wobei die Länge der mindestens einen spiralförmigen Rille (28) zwischen den Enden (30, 32) größer als die Umfangslänge des Reifens ist.

9. Reifen nach mindestens einem der vorgenannten Ansprüche, wobei die mindestens eine spiralförmige Rille (28) die Äquatorebene des Reifens durchquert.

10. Reifen nach mindestens einem der vorgenannten Ansprüche, wobei ein Ende (30, 32) der mindestens einen spiralförmigen Rille (28) ein blindes Ende in der Lauffläche ist.

11. Reifen nach mindestens einem der vorgenannten Ansprüche, wobei die Breite der mindestens einen spiralförmigen Rille (28) über die Länge der Rille variiert.

12. Reifen nach Anspruch 1, der nur eine spiralförmige Rille (28) aufweist.

13. Reifen nach Anspruch 2, wobei die spiralförmige Rille (28) in einem Winkel von zwischen 5° und 20° geneigt ist.

## Revendications

1. Bandage pneumatique, le bandage pneumatique possédant une bande de roulement, une surface de la bande de roulement la plus externe en direction radiale définissant une longueur circonférentielle du bandage pneumatique, la bande de roulement comprenant au moins une rainure (28) s'étendant en direction circonférentielle, la rainure possédant une paire d'extrémités terminales (30, 32) ladite au moins une rainure (28) s'étendant en direction circonférentielle possédant une configuration en spirale sur au moins une partie de la surface de bande de roulement, la longueur de ladite au moins une rainure en spirale (28) entre les extrémités terminales (30, 32) étant supérieure à 50 % de la longueur circonférentielle du bandage pneumatique, **caractérisé en ce que** la bande de roulement ne contient pas plus de dix rainures en spirale.

2. Bandage pneumatique selon la revendication 1, dans lequel au moins une rainure en spirale (28) est inclinée en formant un angle qui n'est pas supérieur à 30° par rapport au plan équatorial (EP) du bandage pneumatique.

3. Bandage pneumatique selon la revendication 1 ou 2, dans lequel les deux extrémités terminales (30, 32) de ladite au moins une rainure en spirale (28) sont situées dans la même moitié de bande de roulement.

4. Bandage pneumatique selon au moins une des revendications précédentes, la bande de roulement du bandage pneumatique possédant une paire de bords de bande de roulement opposés (12, 14), la bande de roulement possédant une largeur définie entre les bords de bande de roulement (12, 14), dans lequel une extrémité terminale (30, 32) de ladite au moins une rainure en spirale (28) est située en deçà de 20 % de la largeur de bande de roulement par rapport à un bord de bande de roulement (12, 14).

5. Bandage pneumatique selon au moins une des revendications précédentes, dans lequel une extrémité terminale (30, 32) de ladite au moins une rainure en spirale (28) se trouve dans le plan équatorial (EP) du bandage pneumatique, ou à proximité dudit plan.

6. Bandage pneumatique selon au moins une des revendications précédentes, la bande de roulement de bandage pneumatique comprenant en outre plusieurs rainures transversales (34), une extrémité terminale (30, 32) de ladite au moins une rainure en spirale (28) coïncidant avec une rainure transversale (34).

7. Bandage pneumatique selon au moins une des revendications précédentes, dans lequel la longueur de ladite au moins une rainure en spirale (28) entre les extrémités terminales (30, 32) est supérieure à 75 % de la longueur circonférentielle du bandage pneumatique.

8. Bandage pneumatique selon la revendication 7, dans lequel la longueur de ladite au moins une rainure en spirale (28) entre les extrémités terminales (30, 32) est supérieure à la longueur circonférentielle du bandage pneumatique.

9. Bandage pneumatique selon au moins une des revendications précédentes, dans lequel ladite au moins une rainure en spirale (28) traverse le plan équatorial du bandage pneumatique.

10. Bandage pneumatique selon au moins une des revendications précédentes, une extrémité terminale (30, 32) de ladite au moins une rainure en spirale (28) représente une extrémité borgne dans la bande de roulement.

11. Bandage pneumatique selon au moins une des revendications précédentes, dans lequel la largeur de ladite au moins une rainure en spirale (28) varie sur la longueur de la rainure.

12. Bandage pneumatique selon la revendication 1, possédant une seule rainure en spirale (28).

13. Bandage pneumatique selon la revendication 2, dans lequel la rainure en spirale 28 est inclinée en formant un angle entre 5° et 20°.
